# EUROPÄISCHE PATENTSCHRIFT

(11) **EP 0 486 509 B1**
(45) Veröffentlichungstag und Bekanntmachung des Hinweises auf die Patenterteilung: **16.02.1994**
(21) Anmeldenummer: 90910560.3
(22) Anmeldetag: 25.07.1990
(51) Int. Cl.: G06F 1/32, B60R 16/02

(54) **AUFWECK-SCHALTUNGSANORDNUNG FÜR EINEN MIKROPROZESSOR**
WAKE-UP CIRCUIT ARRANGEMENT FOR A MICROPROCESSOR
CIRCUIT D'ACTIVATION POUR UN MICROPROCESSEUR

(30) Priorität: 08.08.1989 DE 3926178
(43) Veröffentlichungstag der Anmeldung: 27.05.1992
(73) Patentinhaber: ROBERT BOSCH GMBH, 70442 Stuttgart (DE)
(72) Erfinder: ARNOLD, Karl-Heinz, D-8544 Georgensgmünd (DE)
(86) Internationale Anmeldenummer: DE9000565
(87) Internationale Veröffentlichungsnummer: WO9102303

(56) Entgegenhaltungen:
- US-A- 4 839 530
- IEEE Journal of Solid-State Circuits, vol. SC 9, No. 4. August 1974 (US), P. Lappalainen: "A high-performance monostable multivibrator", pages 190-192.
- Electronic Engineering, vol. 59, no. 732, December 1987, (London, GB) B. Spedding: "Monostable applied to low power systems", page 27.

## Beschreibung

Die Erfindung richtet sich auf eine Schaltungsanordnung nach dem Oberbegriff von Anspruch 1.

Eine derartige Schaltungsanordnung ist aus der DE-PS 29 11 998 bekannt.

Derartige Aufweck-Schaltungen sind insbesondere bei Kraftfahrzeugen deshalb erforderlich, damit der Mikroprozessor und seine Peripherie-Bausteine nicht ständig an der Kraftfahrzeugbatterie im Betriebszustand anliegen und diese hierdurch bei einem längeren Stillstand des Fahrzeugs entladen wird. Andererseits darf der Mikroprozessor auch bei einem solchen längeren Abstellen des Fahrzeugs nicht völlig abgeschaltet werden, da verschiedene Funktionen, wie z.B. die Auslösung der Alarmanlage des Fahrzeugs oder die elektrische Türverriegelung, nur über ihn aufrechterhalten werden können, wenn sie generell über der Mikroprozessor gesteuert werden. Eine ähnliche Problematik ergibt sich generell bei allen batteriebetriebenen Mikroprozessorsystemen, welche aus dem Ruhezustand heraus Funktionsabläufe ansteuern müssen.

Der Erfindung liegt die Aufgabe zugrunde, eine eingangs genannte, gattungsgemäße Schaltung so weiterzubilden, daß bei Ansteuerung von beliebig vielen und/oder unterschiedlichen Schaltern oder bei Anliegen eines Bus-Steuersignals an einem Steuereingang der Schaltungsanordnung ein definiertes Signal für den Mikroprozessor erzeugt wird.

Diese Aufgabe wird gelost gemäß dem kennzeichnender. Teil von Anspruch 1. Durch die danach vorgesehene Ansteuerung des Interrupt-Eingangs des Mikroprozessors, insbesondere eines CMos-Mikroprozessors, ist es möglich, mittels der Aufweck-Schaltung über eine beliebige Anzahl von Tastschaltern den Mikroprozessor von einem vorher softwaremäßig erreichten Idle- oder Stop-Modus in einen Betriebszustand zu bringen (AUFWECKEN). Es kann dabei durch den Mikroprozessor ein schaltbarer Spannungsregler einer Spannungsversorgungsanordnung zur Versorgung von Peripherie-Bausteinen eingeschaltet werden, und es ist möglich, den Mikroprozessor das jeweilige mit dem Interrupt-Befehl aufgerufene Programm abarbeiten zu lassen und dabei auch Daten von einem Controller-Netzwerk einzulesen, diese auszuwerten und die entsprechenden Ausgangstreiber anzusteuern. Sobald an den Eingängen und Ausgängen des Mikroprozessors keine Aktivitäten mehr stattfinden, wird dies softwaremäßig vom Mikroprozessor erkannt und so verarbeitet, daß er nach einer vorgegebenen Zeitspanne selbstätig in den Idle- bzw. Stop-Modus zurückschaltet.

Es wird also z.B. beim Abstellen eines Kraftfahrzeugs ausschließlich die Aufweck-Schaltungsanordnung und der Mikroprozessor mit einer Spannung im Stand-by-Betrieb versorgt und der Mikroprozessor selbst in den Idle-bzw. Stop-Modus gebracht. Die Stromaufnahme einer Multiplex-Station kann dementsprechend durch Abschalten der Peripherie-Bausteine auf ein Minimum reduziert werden.

Mit der Weiterbildung der Zeitgeberstufe nach Anspruch 2 wird sichergestellt, daß der Interrupt-Eingang des Mikroprozessors durch den vorgeschalteten Sollwertschalter immer ein definiertes "High" oder "Low"-Signal erhält.

Durch die Ausgestaltung nach Anspruch 3 wird erreicht, daß der Schaltimpuls für den Interrupt-Eingang des Mikroprozessors auch dann eine hinreichende, definierte Länge aufwesit, wenn das Ansteuersignal selbst nur sehr kurz ist oder sich z.B. infolge Schalterprellens aus mehreren sehr kurzen Signalen zusammensetzt.

Gemäß Anspruch 4 ist es möglich, durch Betätigung eines Tastschalters den Interrupt-Eingang des Mikroprozessors auch dann anzusteuern und dementsprechend den Mikroprozessor in den Betriebszustand zu versetzen, wenn ein anderer Tastschalter sich in einem dauerhaft geschlossenen Zustand befindet, d.h. z.B. ist das Auslösen der Alarmanlage möglich, auch wenn sich der Schalter, der der Zentralverriegelung zugeordnet ist, in einem geschlossenen Zustand befindet.

Durch die Ausgestaltung nach Anspruch 5 ist es möglich, eine Ansteuerung des Interrupt-Eingangs nicht nur durch das Schließen eines Tastschalters sondern auch durch das Öffnen eines bestimmten Tastschalters mit einer entsprechenden, nachgeordneten Schaltungsanordnung zu bewirken.

Die Ausgestaltung nach Anspruch 6 ermöglicht es, die hierfür aufgrund der vorstehend beschriebenen Merkmale grundsätzlich geeignete Aufweck-Schaltung durch eine Busaktivität anzusteuern, d.h. also wenn eine zweite Station ein Datentelegramm aussendet.

Nachfolgend wird die Erfindung anhand von bevorzugten Ausführungsbeispielen in Verbindung mit der Zeichnung näher beschrieben. Dabei zeigen
- Fig. 1: eine schematische Darstellung der wesentlichsten Teile einer erfindungsgemäßen Schaltungsanordnung bei Verwendung in einem Kraftfahrzeug-Multiplex-System und
- Fig. 2: eine Variante der in Fig. 1 dargestellten Aufweck-Schaltungsanordnung.

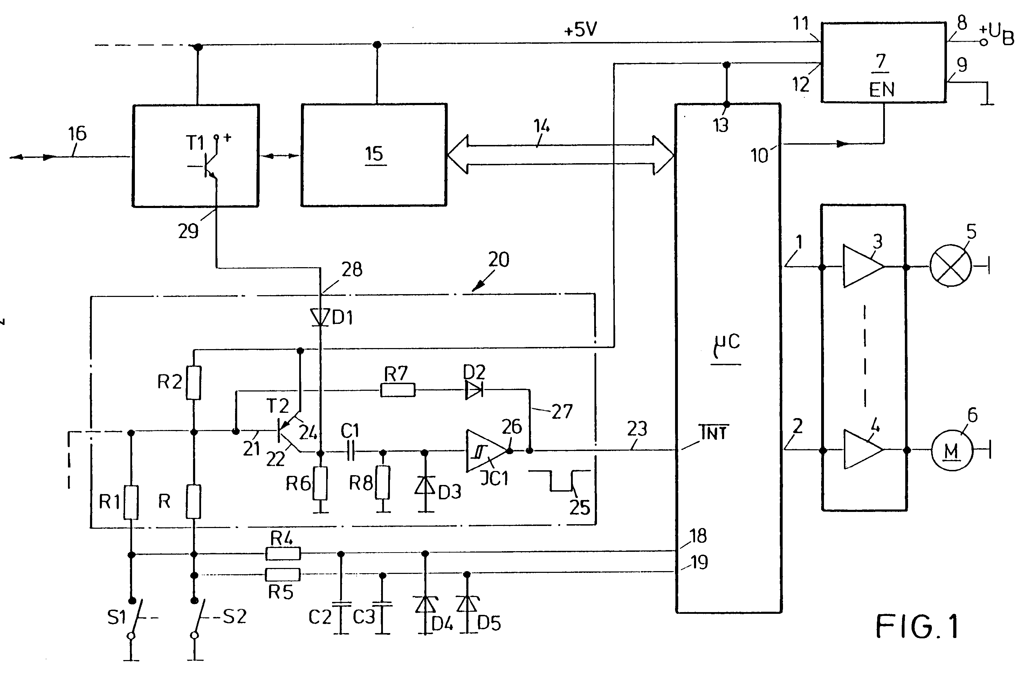

In Fig. 1 ist ein Mikroprozessor µC für eine von mehreren Multiplex-Stationen im Kraftfahrzeug dargestellt, welcher über den Ausgängen 1,2 nachgeschaltete Treiberstufen 3,4 elektrische Einrichtungen 5,6 ansteuert. In der Regel wird eine Vielzahl derartiger elektrischer Einrichtungen im Kraftfahrzeug von jeweils einer Multiplex-Station angesteuert. In Fig. 1 sind der Einfachheit halber nur zwei dargestellt, wie z. B. bei einer Station für eine Kraftfahrzeug-Tür.

Der Mikroprozessor µC wird über eine Spannungsregelanordnung 7 versorgt, welche über einen Eingang 8 mit der positiven Betriebsspannung +U_{B} und über einen Eingang 9 mit der Masse in Verbindung steht und über den Enable-Eingang vom Ausgang 10 des Mikroprozessors µC angesteuert wird. Die Spannungsversorgungsanordnung 7 weist einen Ausgang 11 auf, an welchem eine Spannung von +5 Volt zur Versorgung von Peripherie-Bausteinen abschaltbar anliegt, sowie einen Ausgang 12, an welchem eine Spannung von +5 Volt dauerhaft anliegt, und der über einem Eingang 13 des Mikroprozessors diesen ständig versorgt.

Der Mikroprozessor µC sendet Daten zu weiteren Stationen über einen Datenbus 14 und ein Controller-Netzwerk 15 sowie über eine Bus-Treiber/Empfänger-Anordnung 17 auf eine Multiplex-Busleitung 16 bzw. er empfängt Daten auf entgegengesetztem Wege.

Bei einer Verwendung in einem Kraftfahrzeug kann eine Mehrzahl von Tastschaltern S1,S2 ... vorgesehen sein, wobei z.B. der Tastschalter S1 der Zentralverriegelung und der Tastschalter S2 der Alarmanlage zugeordnet ist.

Wenn der Mikroprozessor µC sich im normalen (aufgeweckten) Betriebszustand befindet, steuert er über den Ausgang 1o den Enable-Eingang EN der Spannungsversorgungsanordnung 7 an, so daß über deren Ausgang 11 die Peripherie-Bausteine 15 und 17 mit Spannung versorgt werden. Ferner erfolgt das Einlesen der Schaltzustände der Tastschalter S1,S2 ... über die Einleseleitungen bzw. Einleseeingänge 18,19 mit den auf Masse geschalteten Kondensatoren C2 bzw. C3 und auf Masse geschalteten Dioden D4 bzw. D5 und den in Reihe geschalteten Widerständen R4 bzw. R5. Ebenso werden Daten auf dem Datenbus gemäß dem abzuarbeitendem Programm eingelesen oder ausgegeben.

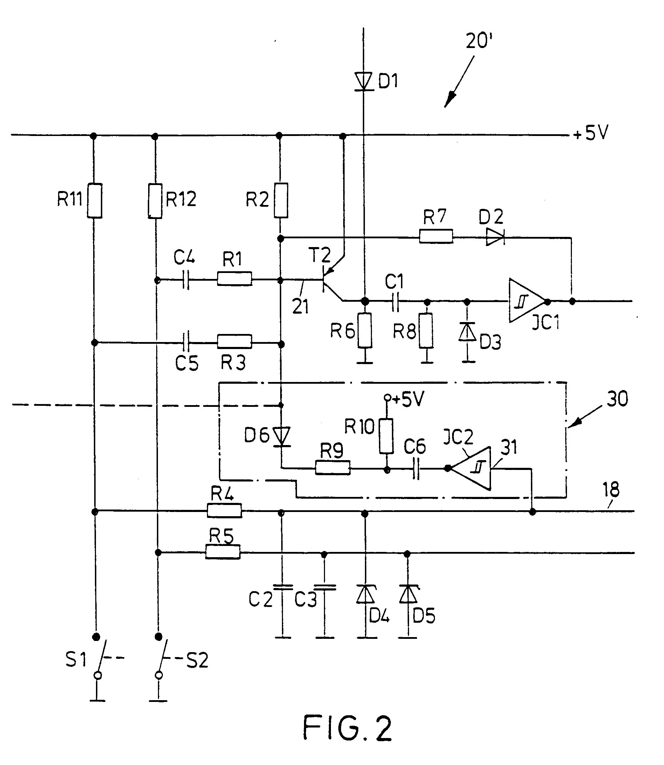

Um den Mikroprozessor µC dann, wenn er sich z.B. nach dem Abziehen des Zündschlüssels in einem Idle- bzw. Stop-Modus befindet, wieder in einen Betriebszustand zu versetzen, ist eine Aufweck-Schaltung 2o bzw. 2o' (Fig. 1 bzw. Fig. 2) vorgesehen.

Diese Aufweck-Schaltung umfaßt einen Schalttransistor T2, welcher Schaltimpulse der Taster S1,S2 über diesen Tastern S1,S2 nachgeschaltete Widerstände R1,R2 von seiner Basis 21 auf den Kollektor 22 und über diesen von Ausgang 23 auf den invertierten Interrupt-Eingang I̅N̅T̅ des Mikroprozessors µC durchschaltet, wenn das Steuersignal an der Basis 21 die durch den Basis-Emitter-Widerstand R2 definierte Schaltschwelle unterschreitet. Dabei ist der Emitter 24 des Transistors T2 direkt mit der ständig am Ausgang 12 der Spannungsversorgungsanordnung 7 anliegenden Betriebsspannung +5 Volt und die Basis mit dem Ausgang 12 über den Widerstand R2 verbunden.

Zur Erzielung eines in seiner Breite zur Schaltung des Interrupt-Eingangs I̅N̅T̅ ausreichenden Schaltsignals 25 ist dem Kollektor 22 des Transistors T2, der über einen Widerstand R6 auf Masse liegt, ein Kondensator C1 nachgeschaltet, der über einen gegen Masse geschalteten weiteren Widerstand R8 geladen wird, wobei dem Kondensator C1 ein als Schmitt-Trigger (Schwellwertschalter) ausgebildeter Inverter IC1 und dessen Ausgang 26 der Interrupt-Eingang I̅N̅T̅ nachgeschaltet ist. Zum Ladewiderstand R8 ist eine Diode D3 in Sperrichtung parallel geschaltet.

Die Reihenschaltung aus dem Kondensator C1 und dem Widerstand R8 wirkt als Differenzierglied gegenüber Spannungsänderungen am Kollektor 22 des Schalttransistors T2, d.h. bei einer durch einen Steuerimpuls aus den Tastern S1,S2 bedingten Spannungsanhebung am Kollektor 22 wird der Kondensator C1 zunächst über R8 aufgeladen und entlädt sich bei gesperrtem Schalttransistor T2 über den Widerstand R6 und über die Diode D3. Dabei wird z.B. bei einer Spannung U_{B/2} die Schaltschwelle des Schmitt-Triggers des Inverters IC1 durchschritten, so daß aus dem positiven +5 Voltsignal auf der Eingangsseite ein "Low"-Signal am Ausgang 26 des Inverters IC1 erzeugt wird, welches den Interrupt-Eingang I̅N̅T̅ des Mikroprozessors µC beaufschlagt und auf diese Weise den Mikroprozessor µC in einen Betriebszustand versetzt, bis sich dieser softwaremäßig nach Abarbeitung eines jeweiligen Programmteils wieder abschaltet in den Stop-Modus, wobei über dem Ausgang 10 die +5V Versorgungsspannung am Ausgang 11 der Versorgungsanordnung 7 abgeschaltet wird.

Dem Ausgang 26 des Inverters IC1 ist eine Rückkopplungsleitung 27 nachgeschaltet, welche über eine Diode D2 und einen Widerstand R7 auf die Basis 21 des Schalttransistors T2 zurückführt. Durch diese Rückkopplungsleitung 27 ist gewährleistet, daß unabhängig von der Dauer des Schaltsignals der Tastschalter S1,S2 und damit auch unabhängig von einem etwaigen Schalterprellen in jedem Fall ein Schaltimpuls 25 mit einer vorgegebenen definierten Länge erzeugt wird, indem der Schalttransistor T2 aufgrund der Rückkopplung durchgeschalten bleibt, bis das Potential des Kondensators C1 am Eingang des Inverters IC1 unter die Schaltschwelle gefallen ist. Erst dann wird das Signal am Ausgang des Inverters IC1 wieder "High" und der Schalttransistor T2 bei geöffneten Tastern S1, S2 wieder in den nichtleitenden Zustand versetzt, so daß er für einen neuen Schaltvorgang bereit ist.

In gleicher Weise wie über die Taster S1, S2 kann der Interrupt-Eingang I̅N̅T̅ des Mikroprozessors µC auch durch Busaktivität aktiviert werden, d.h. wenn eine zweite Station ein Datentelegramm sendet. In diesem Fall erscheint an dem Steuereingang 28 der Aufweck-Schaltungsanordnung 2o' über den Ausgang 29 der Bus-Treiber/Empfänger-Schaltungsanordnung 17 ein "High"-Signal, welches über die Diode D1 auf den Kollektor 22 des Schalttransistors T2 bzw. auf den Eingang der Zeitgeberstufe gegeben wird, die hier durch den Kondensator C1, die Widerstände R6 und R8, die Diode D3 und den Inverter IC1 gebildet wird. Diese Zeitgeberstufe legt für eine durch die Kapazität des Kondensators C1, die Größe des Widerstands R8 und die Schaltschwelle des Inverters IC1 vorgegebene Zeit ein "Low"-Signal an den Interrut-Eingang I̅N̅T̅ des Mikroprozessors µC an.

Bei der Variante der Aufweck-Schaltung 2o', wie sie in Fig. 2 dargestellt ist, ist jedem Taster S1,S2 ein Kondensator C4 bzw. C5 nachgeschaltet, der wiederum mit den Widerständen R1 bzw. R3 verbunden ist, welche an der Basis 21 des Schalttransistors T2 liegen. Die Kondensatoren C4 bzw. C5 liegen auf der Seite der Tastschalter S1,S2 über Widerstände R11 bzw. R12 an +5 Volt Betriebsspannung des Ausgangs 12 der Spannungsversorgungsanordnung 7.

Dementsprechend bilden die Kondensatoren C4 bzw. C5 Differenzierglieder, so daß an der Basis 21 des Schalttransistors T2 keine diesen durchschaltende Spannung anliegt, solange sich die eingangsseitigen Spannungsverhältnisse nicht ändern. Lediglich während der Zeit der Umladung der Kondensatoren C4 bzw. C5 wird der Schalttransistor T2 aufgrund des Spannungsabfalls über den Widerständen R1 bzw. R3 durchgeschaltet.

Dies führt dazu, daß z.B. eine Betätigung des Tasters S2 entsprechend z.B. einem Kontakt einer Alarmanlage in einem Kraftfahrzeug auch dann zu einem Durchschalten des Schalttransistors T2 und zu einer Aktivierung des Mikroprozessors µC über den Interrupt-Eingang I̅N̅T̅ führt, wenn der andere Tastschalter S1, der z.B. der Zentralverriegelung zugeordnet ist, dauerhaft geschlossen ist. Mit anderen Worten kann zwar durch das Schließen des Tasters bzw. Schalters S1 der Schalttransistor T2 durchgesteuert werden, solange aufgrund der durch den Schaltvorgang bedingten Spannungsänderung der Kondensator C5 umgeladen wird, nach Einstellung eines Gleichgewlchtszustandes bei dauerhaft eingeschaltetem Schalter S1 fließt dann aber über R3 kein Strom mehr, so daß über der Basis des Schalttransistors T2 keine Spannung mehr abfällt und dieser wieder öffnet. Die Ausbildung des Schaltsignals 25 am Interrupt-Eingang I̅N̅T̅ des Mikroprozessors µC erfolgt in der gleichen Weise wie im Zusammenhang mit Fig. 1 beschrieben.

Für manche Anwendungszwecke ist es wünschenswert, daß der Mikroprozessor µC nicht nur beim Einschalten eines Tasters S1 oder S2 aktiviert wird, sondern auch beim Ausschalten desselben, z.B. beim Öffnen der Zentralverriegelung und damit beim Öffnen des Tastschalters S1. Zu diesem Zweck ist eine Schaltungsanordnung 3o vorgesehen. Für jeden Tastschalter S1 bzw. S2, der beim Ausschalten den Mikroprozessor µC aktivieren soll, ist jeweils eine solche Schaltungsanordnung 3o erforderlich. Bei dem in Fig. 2 gezeichneten Ausführungsbeispiel ist sie nur für den Taster S1 vorgesehen. Dementsprechend ist abzweigend nach dem Widerstand R4 in der zum üblichen Einleseeingang 18 führenden Leitung für den Tastschalter S1 ein Inverter IC2 mit nachgeschaltetem Kondensator C6 angeschlossen, welchem ein Widerstand R9 und eine Diode D6 nachgeschaltet sind, wobei der anodenseitige Ausgang der Diode D6 auf die Basis 21 des Schalttransistors T2 geführt ist. Zwischen dem Kondensator C6 und dem Widerstand R9 ist ein Widerstand R1o angeschlosasen, der auf positives Potential geschaltet ist.

Diese Schaltungsanordnung führt dazu, daß der Kondensator C6 entladen ist, solange der Taster S1 geschlossen ist. Beim Öffnen von S1 wird der Ausgang von IC2 "LOW" und der Schalttransistor T2 durch den Ladestrom von dem Kondensator C6 über D6 und R9 leitend gesteuert und sperrt wieder nach dem Abklingen dieses Stromes. Diese Abklingzeit ist so lang dimensioniert, daß in jedem Fall ein Signal 25 ausreichender Länge am Interrupt-Eingang I̅N̅T̅ des Mikroprozessors µC erzeugt werden kann. An dem Eingang 31 des Inverters IC2 liegt also ein "Low"-Signal an, solange der Taster S1 geschlossen ist. Beim Öffnen des Tastschalters S1 liegt über dem Widerstand R11 ein "High"-Signal an, welches durch den Inverter IC2 invertiert wird, so daß es zu einer Umladung des Kondensators C6 kommt, welche zu einem Spannungsabfall führt, der, wie beschrieben, den Schalttransistor T2 durchschaltet.

## Patentansprüche

1. Aufweck-Schaltungsanordnung für einen, elektrische Einrichtungen, insbesondere in einem Kraftfahrzeug, steuernden Mikroprozessor, wobei der Mikroprozessor in einen Idle- oder Stop-Modus versetzbar ist und aus diesem Modus durch ein externes Schaltsignal für die Zeitdauer der Abarbeitung anstehender Programme in seinen Betriebszustand versetzbar ist, indem das externe Steuersignal einen dem Mikroprozessor zugeordneten elektronischen Aufweckschalter auslöst, dadurch gekennzeichnet, daß die Schaltsignale in Form von Potentialsprüngen auf eine Zeitgeberstufe (C1, R8, IC1) gelangen, deren Ausgang (23) einen Impuls (25) von definierter Länge auf einen Interrupt-Eingang (I̅N̅T̅) des Mikroprozessors (µC) schaltet, mit dem der Mikroprozessor den Idle- oder Stop-Modus verläßt und eine Spannungsversorgungsanordnung für Peripherie-Bausteine einschaltet.

2. Schaltungsanordnung nach Anspruch 1, dadurch gekennzeichnet, daß in der Zeitgeberstufe (C1, R8, IC1) positive Spannungsimpulse auf einen Kondensator (C1) gegeben werden, zu dem ein mit Masse verbundener Widerstand (R8) in Reihe geschaltet ist, und an deren Verbindung eine zur Masse gesperrt geschaltete Diode (D3) sowie der Eingang eines Schwellwertschalters (C1) angeschlossen ist, dem der Interrupt-Eingang (I̅N̅T̅) des Mikroprozessors (µC) nachgeschaltet ist.

3. Schaltungsanordnung nach Anspruch 2, dadurch gekennzeichnet, daß Kondensator (C1), Widerstand (R8), Diode (D3) und Inverter (IC1) dem Kollektor eines Schalttransistors (T2) nachgeordnet sind, daß die Schaltsignale an die Basis des Schalttransistors (T2) gelegt werden, und daß der Ausgang (26) des als Inverter (IC1) ausgebildeten Schwellwertschalter über eine Rückkopplungs-Leitung (27) mit einer in Durchlaßrichtung geschalteten Diode (D2) mit der Basis des Transistors (T2) verbunden ist.

4. Schaltungsanordnung nach Anspruch 3, dadurch gekennzeichnet, daß zwischen der Basis des Schalttransistors (T2) und mindestens einem Schalter (S1 bzw. S2) ein Kondensator (C4 bzw. C5) und ein hierzu in Reihe geschalteter Widerstand (R1 bzw. R3) angeordnet ist.

5. Schaltungsanordnung nach Anspruch 3, dadurch gekennzeicnnet, daß wenigstens einer der Schalter (S1) über einen weiteren Schwellwertschalter (IC2), einen nachgeschalteten Kondensator (C 6) und einen nachgeschalteten Widerstand (R10) mit positivem Potential verbunden ist sowie über einen weiteren Widerstand (R9) und eine in Sperrrichtung geschaltete Diode (D6) mit der Basis des Schalttransistors (T2) verbunden ist.

6. Schaltungsanordnung nach einem der Ansprüche 1 bis 5, wobei eine mehrere Mikroprozessoren aufweisende, Stationen verbindende Multiplex-Datenleitung an mindestens eine Bus-Treiber/Empfänger-Anordnung angeschlossen ist, dadurch gekennzeichnet, daß die Treiber/Empfänger-Anordnung (17) über einen Steuereingang (28) der Aufweckschaltung (2o,2o') und eine Diode (D1) mit der Zeitgeberstufe (C1, R8, IC1) verbunden ist.

## Claims

1. Wake-up circuit arrangement for a microprocessor that controls electrical devices, in particular in a motor vehicle, in which the microprocessor can be switched into an idle or stop mode, and can be switched from this mode by an external switching signal into its operating mode for the duration of the execution of pending programs, in that the external control signal triggers an electronic wake-up switch assigned to the microprocessor, characterized in that the switching signals proceed to a timer stage (C1, R8, IC1) in the form of potential jumps, the output (23) of which timer stage connects a pulse (25) of defined length to an interrupt input (I̅N̅T̅) of the microprocessor (µC), upon which the microprocessor quits the idle or stop mode and switches on a voltage supply arrangement for peripheral modules.

2. Circuit arrangement according to Claim 1, characterized in that positive voltage pulses are sent in the timer stage (C1, R8, IC1) to a capacitor (C1), with which a resistor (R8) connected to ground is connected in series, and to the connection of which a diode (D3) that is connected in reverse direction to ground and the input of a threshold switch (S1) is connected, connected downstream of which is the interrupt input (I̅N̅T̅) of the microprocessor (µC).

3. Circuit arrangement according to Claim 2, characterized in that capacitor (C1), resistor (R8), diode (D3) and inverter (IC1) are connected downstream of the collector of a switching transistor (T2), in that the switching signals are applied to the base of the switching transistor (T2), and in that the output (26) of the threshold switch designed as inverter (IC1) is connected to the base of the transistor (T2) via a feedback line (27) with a diode (D2) connected in forward direction.

4. Circuit arrangement according to Claim 3, characterized in that a capacitor (C4 and C5 respectively) and a resistor (R1 and R3 respectively) connected in series therewith are arranged between the base of the switching transistor (T2) and at least one switch (S1 and S2 respectively).

5. Circuit arrangement according to Claim 3, characterized in that at least one of the switches (S1) is connected to positive potential via a further threshold switch (IC2), a downstream capacitor (C6) and a downstream resistor (R10), and also to the base of the switching transistor (T2) via a further resistor (R9) and a diode (D6) connected in reverse direction.

6. Circuit arrangement according to one of Claims 1 to 5, in which a multiplex data line connecting stations having a plurality of microprocessors is connected to at least one bus driver/receiver arrangement, characterized in that the driver/receiver arrangement (17) is connected to the timer stage (C1, R8, IC1) via a control input (28) of the wake-up circuit (20, 20') and a diode (D1).

## Revendications

1. Circuit d'activation d'un microprocesseur commandant une installation électrique notamment dans un véhicule automobile, le microprocesseur pouvant être mis en mode d'arrêt ou de repos pour être remis dans son mode de fonctionnement pendant le temps nécessaire au traitement de programme en cours, et un signal de commande externe déclenchant un circuit d'activation électronique associé au microprocesseur, circuit caractérisé en ce que les signaux de commutation se présentent sous la forme de sauts de potentiel sur un générateur de temps (C1, R8, IC1) dont la sortie (23) applique une impulsion (25) de longueur déterminée à une entrée d'interruption (I̅N̅T̅) du microprocesseur (µC) pour faire quitter au microprocesseur son mode d'arrêt ou de repos et brancher une alimentation en tension sur les composants périphériques.

2. Circuit selon la revendication 1, caractérisé en ce que le générateur de temps (C1, R8, IC1) fournit des impulsions de tension positives à un condensateur (C1) avec en série une résistance (R8) reliée à la masse, la jonction de ces deux éléments étant reliée à une diode (D3) par ailleurs reliée à la masse, et à l'entrée d'un commutateur à seuil (IC1) lui-même relié à l'entrée d'interruption (I̅N̅T̅) du micro-processeur (µC).

3. Circuit selon la revendication 2, caractérisé en ce que le condensateur (C1), la résistance (R8), la diode (D3) et l'inverseur (IC1) sont en aval du collecteur d'un transistor de commutation (T2), les signaux de commutation étant appliqués à la base du transistor de commutation (T2) et la sortie (26) du commutateur à seuil en forme d'inverseur (IC1) étant reliée par une ligne de réaction (27) à une diode (D2) branchée dans le sens passant sur la base du transistor (T2).

4. Circuit selon la revendication 3, caractérisé en ce qu'entre la base du transistor de commutation (T2) et au moins un interrupteur (S1, S2), il y a un condensateur (C4, C5) et une résistance en série (R1, R3).

5. Circuit selon la revendication 3, caractérisé en ce qu'au moins un interrupteur (S1) est relié au potentiel positif, par un autre commutateur à seuil (IC2) suivi d'un condensateur (C6) et d'une résistance (R10), et à la base du transistor de commutation (T2) par une autre résistance (R9) et une diode branchée dans le sens bloquant (D6).

6. Circuit selon l'une des revendications 1 à 5 avec une ligne de données en multiplex reliant plusieurs postes à microprocesseur à au moins un circuit récepteur/circuit d'entraînement de bus, caractérisé en ce que l'ensemble récepteur/circuit d'entraînement (17) est relié par une entrée de commande (23) du circuit d'activation (20, 20') et une diode (D1), au générateur d'horloge (C1, R8, IC1).
